# FASCICULE DE BREVET EUROPEEN

(11) **EP 3 577 737 B1**
(45) Date de publication et mention de la délivrance du brevet: **26.03.2025**
(21) Numéro de dépôt: 18701057.4
(22) Date de dépôt: 29.01.2018
(51) Int. Cl.: H02J 3/18, H02J 3/16, H02P 9/10

(54) **PROCEDE DE REGULATION D'ALTERNATEURS CONNECTES EN PARALLELE POUR LA REPARTITION DE CHARGE REACTIVE**
VERFAHREN ZUR REGELUNG VON PARALLEL GESCHALTETEN WECHSELSTROMGENERATOREN ZUR VERTEILUNG EINER REAKTIVEN LAST
METHOD FOR REGULATING ALTERNATORS CONNECTED IN PARALLEL FOR THE DISTRIBUTION OF A REACTIVE LOAD

(30) Priorité: 03.02.2017 FR 1750923
(43) Date de publication de la demande: 11.12.2019
(73) Titulaire: Moteurs Leroy-Somer, 16915 Angouleme Cedex 9 (FR)
(72) Inventeur: MORISSEAU, Vincent, 16110 La Rochefoucauld (FR); FRATANI, Jérémy, 16600 Magnac-Sur-Touvre (FR); MOSER, Samuel, 16160 Gond Pontouvre (FR); PAILLOU, Jean-François, 45000 Orléans (FR)
(74) Mandataire: Cabinet Nony
(86) Numéro de dépôt international: PCT/EP2018/052171
(87) Numéro de publication internationale: WO 2018/141695

(56) Documents cités:
- EP-A1- 1 508 951
- CN-A- 101 924 512
- CN-A- 103 490 425
- US-A1- 2010 134 076
- US-A1- 2015 357 819

## Description

La présente invention concerne la gestion d'un parc d'alternateurs débitant en parallèle sur une charge.

Lorsque des alternateurs d'un parc d'alternateurs sont couplés en parallèle entre eux et délivrent de la puissance aux bornes d'une charge, la bonne répartition de charge réactive entre tous les alternateurs est un facteur important du bon fonctionnement du parc. En effet, la puissance réactive impacte la valeur du courant d'excitation de l'alternateur, influant ainsi directement sur la sollicitation de la machine électrique et son vieillissement. Une bonne répartition de la charge réactive assure une sollicitation équilibrée pour les alternateurs couplés en parallèle.

Une méthode est connue pour assurer cette répartition de charge, dite de statisme, ou « *reactive droop »* en anglais.

La demande EP 2 722 955 décrit un régulateur de tension agissant par la méthode dite de statisme sur un système d'alternateurs en parallèle

EP 1 508 951 A1 divulgue un système de contrôle de puissance réactive réelle pour des générateurs de turbines à vent. Ce système de contrôle de tension à boucle fermée comporte un contrôleur dynamique qui fournit une puissance désirée une charge connectée au PCC.

US 2010/134076 A1 décrit une méthode de régulation de puissance réactive pour des usines d'énergie renouvelable. Un signal de sortie d'un régulateur de puissance réactive est généré sur la base au moins en partie d'un signal de contrôle de puissance réactive reçu d'une unité décisionnaire.

US 2015/357819 A1 concerne une méthode de contrôle de la puissance réactive d'un générateur de puissance le faisant passer d'un état de puissance réactive initiale à un état désiré. Ces états sont déterminés par un contrôleur de puissance central.

CN 101 924 512 A divulgue un système de contrôle automatique de générateur électrique pour un navire. Plusieurs dispositifs électriques sont connectés via un bus CAN à un centre de contrôle distant assurant l'équilibre de puissance réactive.

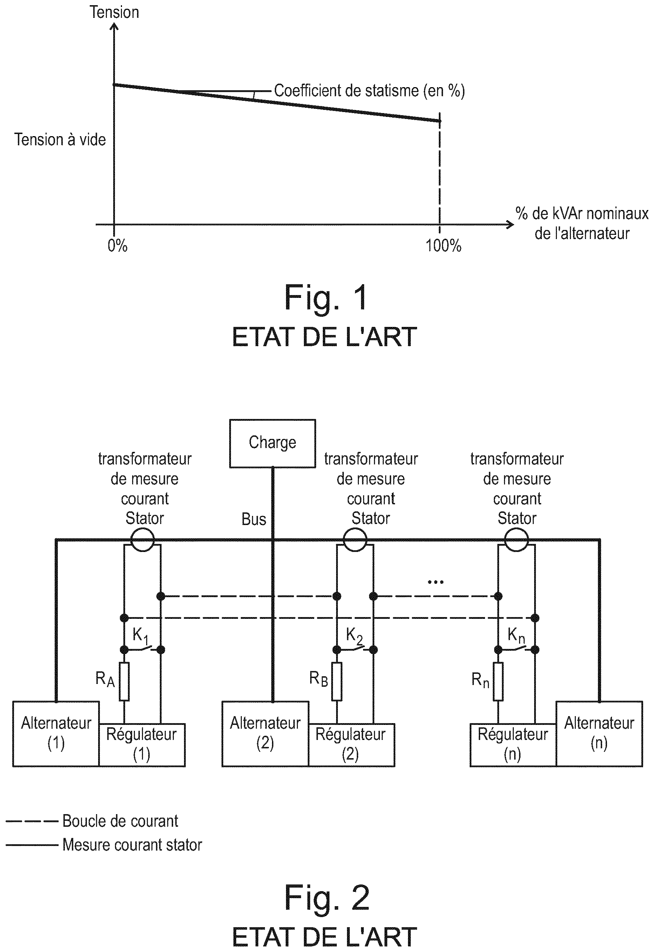

La méthode du statisme, illustrée à la figure 1, repose sur la mesure de la puissance réactive délivrée par l'alternateur, exprimée en pourcentage de kilovoltampères réactifs nominaux (kVAr). Plus la puissance réactive délivrée est importante, plus la tension est abaissée proportionnellement selon le coefficient directeur de la droite du statisme. Ainsi, lors du couplage d'un alternateur A à d'autres alternateurs qui délivrent la puissance à une charge, la tension de l'alternateur A est égale à la tension à vide pour laquelle aucune charge n'est présente aux bornes de l'alternateur lors du couplage, et la tension moyenne des autres alternateurs est inférieure à la tension à vide car ils subissent la présence de la charge. Comme naturellement la charge réactive se déplace vers la tension la plus haute, la tension de l'alternateur A va descendre progressivement au fur et à mesure de sa prise en charge, et la tension des autres alternateurs va monter, jusqu'à ce que l'ensemble atteigne un point d'équilibre.

Le statisme permet de conserver la mesure des puissances sur le régulateur et d'ajouter aisément un alternateur supplémentaire puisqu'il suffit d'avoir des réglages identiques de tension à vide et de coefficient de statisme. En revanche, pour un fonctionnement idéal, tous les alternateurs doivent être réglés avec une même tension à vide et un même coefficient directeur. En cas de déréglage d'un de ces deux paramètres, le partage n'est plus réalisé correctement. La mise en service est ainsi délicate. En outre, la tension variant suivant le coefficient directeur de statisme, la consigne de tension n'est pas maintenue quelle que soit la charge.

Une autre méthode connue est la méthode dite de différentiel réactif, ou *« cross current compensation »* en anglais.

Le brevet US 7 053 503 décrit un système de contrôle de puissance utilisant la méthode du différentiel réactif, consistant à répartir les charges réactives sur les différentes machines électriques en parallèle à partir d'une boucle réalisée physiquement entre les mesures de courant des alternateurs.

Comme illustré à la figure 2, le partage de charge est réalisé par une boucle de courant créée entre des transformateurs de mesure de courant stator. A l'équilibre de charge ou à vide, les courants entrant dans chaque régulateur sont nuls. Ainsi, la mesure de puissance par le régulateur n'est pas possible. La consigne de tension est toujours maintenue à la valeur de tension à vide, et ce quelle que soit la charge réactive.

La méthode du différentiel réactif permet d'avoir une consigne de tension stable et une répartition de charge réactive entre alternateurs correcte, même si la tension à vide de chaque alternateur est déréglée, et de compenser les éventuels déréglages de coefficient directeur qui n'est utilisé que pour remonter plus ou moins rapidement à la tension de consigne.

Toutefois, cette méthode induit un câblage complexe. Une création rigoureuse d'une boucle de courant entre plusieurs alternateurs peut entraîner des problèmes d'isolement. L'ajout d'un alternateur supplémentaire demande ainsi la modification globale de la boucle. En outre, des résistances doivent être déterminées en fonction du régulateur, de la puissance réactive nominale de la machine électrique et du ratio du transformateur de mesure du courant stator, et des interrupteurs doivent être utilisés pour court-circuiter un alternateur non couplé à la charge. Une partie de la méthode dite du statisme doit être utilisée dans le régulateur pour permettre la montée et la descente de la consigne de tension. La mesure des puissances sur les régulateurs doit être réalisée par une autre entrée de mesure courant.

Outre le statisme et la méthode du différentiel réactif, il existe dans l'état de l'art une autre méthode qui consiste à partager des charges réactives entre régulateurs à l'aide d'une liaison de norme RS485. Cela permet de compenser la chute de tension du statisme. Cette méthode revient à partager par un bus de terrain la charge totale présente aux bornes d'alternateurs connectés entre eux. La valeur de charge à alimenter par chaque alternateur est alors déterminée par une simple proportionnalité, la consigne de tension étant corrigée en fonction.

Il existe un besoin pour perfectionner encore les méthodes de répartition de charge réactive entre des alternateurs fonctionnant en parallèle, notamment afin d'assurer une sollicitation équilibrée de ces derniers.

L'invention a pour but de répondre à ce besoin, et elle y parvient, selon l'un de ses aspects, grâce à un procédé de régulation d'un parc d'alternateurs comportant au moins deux alternateurs débitant en parallèle sur une charge, équipé chacun d'un régulateur configuré pour délivrer un signal de sortie représentatif du taux de puissance réactive de l'alternateur correspondant rapporté à sa puissance réactive nominale, et d'une loi de régulation permettant de modifier le taux de puissance réactive de l'alternateur en fonction d'un signal d'entrée, procédé dans lequel on génère à partir des signaux de sortie représentatifs du taux de puissance réactive de chacun des alternateurs, délivré par les régulateurs correspondants, un signal pondéré envoyé comme signal d'entrée de ces régulateurs, de façon à faire converger chacun des alternateurs vers un taux de puissance réactive prédéfini.

Grâce à l'invention, il est possible de réaliser une fonction de partage de charge réactive entre différents alternateurs fonctionnant en parallèle, avec un câblage simplifié et des mesures de puissance disponibles sans nécessiter l'ajout de transformateurs supplémentaires, et tout en conservant la tension délivrée égale en permanence à la consigne de tension, et ce quelle que soit la valeur de la charge appliquée.

Grâce à l'invention, tous les alternateurs en parallèle délivrent sur la charge le même taux de puissance réactive prédéfini, et l'échange de courant réactif entre alternateurs est également évité. Un alternateur supplémentaire peut être ajouté facilement aux alternateurs déjà en place, sans avoir à modifier le câblage de la régulation et la configuration des autres alternateurs. De préférence, le signal pondéré est la moyenne arithmétique des signaux de sortie représentatifs du taux de puissance réactive de chacun des alternateurs. L'invention permet de comparer la puissance réactive délivrée par un alternateur à la puissance réactive moyenne de tous les alternateurs fonctionnant en parallèle.

Le taux de puissance réactive d'un alternateur est de préférence exprimé en pourcentage de sa puissance réactive nominale.

Le taux de puissance réactive prédéfini correspond avantageusement à un point d'équilibre, notamment calculé en divisant la valeur de la charge par la somme des puissances réactives nominales de tous les alternateurs et exprimé en pourcentage.

Le taux de puissance réactive prédéfini peut correspondre à la moyenne des taux de puissance réactive de tous les alternateurs en parallèle. Lors de l'exécution du procédé de régulation selon l'invention, chacun des alternateurs converge avantageusement vers le même taux de puissance réactive.

La loi de régulation utilise avantageusement le fait que, lorsque des alternateurs sont couplés en parallèle, un alternateur ayant une tension plus faible que la moyenne des tensions va délivrer une puissance réactive moins importante, alors qu'un alternateur ayant une tension plus importante que la moyenne va délivrer une puissance réactive plus importante.

Selon une caractéristique avantageuse, une nouvelle consigne de tension est calculée par chaque régulateur en fonction d'un écart entre le taux de puissance réactive actuel et le taux correspondant au signal d'entrée, cette nouvelle consigne de tension permettant de déplacer le taux de puissance réactive de l'alternateur pour le rapprocher du taux de puissance prédéfini.

La loi de régulation permet de calculer avantageusement à chaque instant la différence entre le taux de puissance réactive actuel d'un alternateur et le signal pondéré. Suivant cette différence, la consigne de tension de l'alternateur concerné est de préférence modifiée selon une droite de coefficient directeur paramétrable, afin notamment de rapprocher le taux de puissance réactive de l'alternateur du taux de puissance prédéfini.

Selon l'invention, la pondération des signaux de sortie peut être réalisée de façon analogique. Dans une variante, la pondération des signaux de sortie est réalisée de façon numérique.

L'invention a encore pour objet, selon un autre de ses aspects, un parc d'alternateurs comportant au moins deux alternateurs débitant en parallèle sur une charge, équipé chacun d'un régulateur configuré pour délivrer un signal de sortie représentatif du taux de puissance réactive de l'alternateur correspondant rapporté à sa puissance réactive nominale, et d'une loi de régulation permettant de modifier le taux de puissance réactive de l'alternateur en fonction d'un signal d'entrée,
les régulateurs recevant en entrée un signal pondéré généré à partir des signaux de sortie représentatifs du taux de puissance réactive de chacun des alternateurs de façon à faire converger chacun des alternateurs vers un taux de puissance réactive prédéfini.

Chaque alternateur peut délivrer son taux de puissance réactive par une sortie analogique configurée en tension.

Dans ce cas, l'entrée de chaque régulateur peut être configurée en tension. La pondération des signaux de sortie est de préférence réalisée par un circuit de centralisation analogique.

Le circuit de centralisation peut avantageusement raccorder en un point commun relié aux entrées analogiques les différentes sorties analogiques provenant des régulateurs à l'aide de résistances, notamment de valeurs identiques.

Dans une variante, la pondération des signaux de sortie est réalisée par un circuit de centralisation numérique.

De préférence, le circuit de centralisation est un système externe de type automate programmable.

Chaque régulateur délivre avantageusement le taux de puissance réactive de son alternateur sur un bus numérique de communication, dit « bus de terrain ».

De préférence, le circuit de centralisation lit le taux de puissance réactive de chaque régulateur, détermine un signal pondéré et l'envoie à chaque régulateur via ledit bus numérique de communication.

L'invention pourra être mieux comprise à la lecture de la description qui va suivre, d'exemples non limitatifs de mise en œuvre de celle-ci, et à l'examen du dessin annexé, sur lequel :
- la figure 1, décrite précédemment, représente une courbe de loi de régulation en tension, dite « du statisme », selon l'art antérieur,
- la figure 2, décrite précédemment, illustre schématiquement un ensemble d'alternateurs mis en parallèle suivant la méthode du différentiel réactif selon l'art antérieur,
- les figures 3 et 4 sont des schémas d'un parc d'alternateurs selon l'invention, avec respectivement un circuit de centralisation analogique et numérique,
- la figure 5 illustre un exemple de répartition de charge réactive selon l'invention, et
- la figure 6 représente un exemple de loi de régulation selon l'invention.

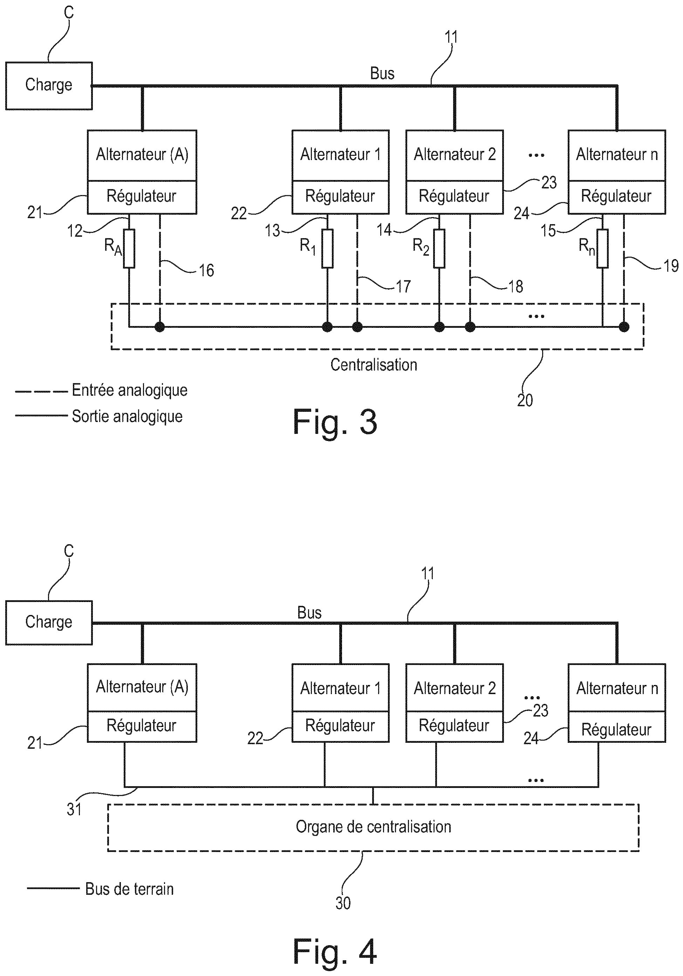

On a représenté schématiquement à la figure 3 un parc de N alternateurs débitant en parallèle sur une charge C via un bus 11. Chaque alternateur comporte un régulateur 21, 22, 23, 24.

Dans cet exemple, chaque alternateur délivre par une sortie analogique 12, 13, 14, 15 configurée en tension son taux de puissance réactive rapporté à sa puissance réactive nominale.

Un circuit de centralisation analogique 20, qui consiste à pondérer les signaux de sortie représentatifs du taux de puissance réactive de chacun des alternateurs, est réalisé en raccordant en un point commun les différentes sorties analogiques 11, 12, 13, 14 provenant de chaque régulateur 21, 22, 23, 24 par le biais de résistances R_{A}, R₁, R₂ ... Rn.

Ces résistances R_{A}, R₁, R₂ ... Rn sont avantageusement de valeur identique si le signal pondéré correspond à la moyenne arithmétique des signaux de sortie représentatifs du taux de puissance réactive de chacun des alternateurs. Dans une variante, les résistances R_{A}, R₁, R₂ ... Rn ont des valeurs différentes.

Le point commun du circuit de centralisation 20 est ensuite raccordé à une entrée analogique 16, 17, 18, 19 de chaque régulateur 21, 22, 23, 24, configurée en tension, afin de mesurer un taux pondéré de puissance réactive de tous les alternateurs en parallèle.

De préférence, le taux pondéré correspond à un taux moyen.

Comme expliqué précédemment, une loi de régulation est ensuite appliquée par chacun des régulateurs 21, 22, 23, 24 de manière à faire converger chacun des alternateurs vers un taux de puissance réactive prédéfini.

De préférence, le taux de puissance réactive prédéfini correspond à la moyenne des puissances réactives de tous les alternateurs en parallèle.

La figure 4 représente schématiquement le cas où les N alternateurs sont connectés à un circuit de centralisation numérique 30 via un bus numérique de communication 31 dit « bus de terrain ». Dans l'exemple décrit, le circuit de centralisation numérique 30 est un système externe de type automate programmable.

Chaque régulateur 21, 22, 23, 24 délivre sur le bus de terrain 31 le taux de puissance réactive de l'alternateur correspondant.

Le circuit de centralisation 30 lit le taux de puissance réactive de chaque alternateur, calcule un taux pondéré de puissance réactive et l'envoie à chaque régulateur 21, 22, 23, 24 via le bus de terrain 31.

De préférence, le taux pondéré de puissance réactive correspond à la moyenne des taux de puissance réactive de tous les alternateurs en parallèle.

Comme expliqué précédemment, une loi de régulation est ensuite appliquée par chacun des régulateurs 21, 22, 23, 24 de manière à faire converger chacun des alternateurs vers un taux de puissance réactive prédéfini. De préférence, le taux de puissance réactive prédéfini correspond à la moyenne des puissances réactives de tous les alternateurs en parallèle.

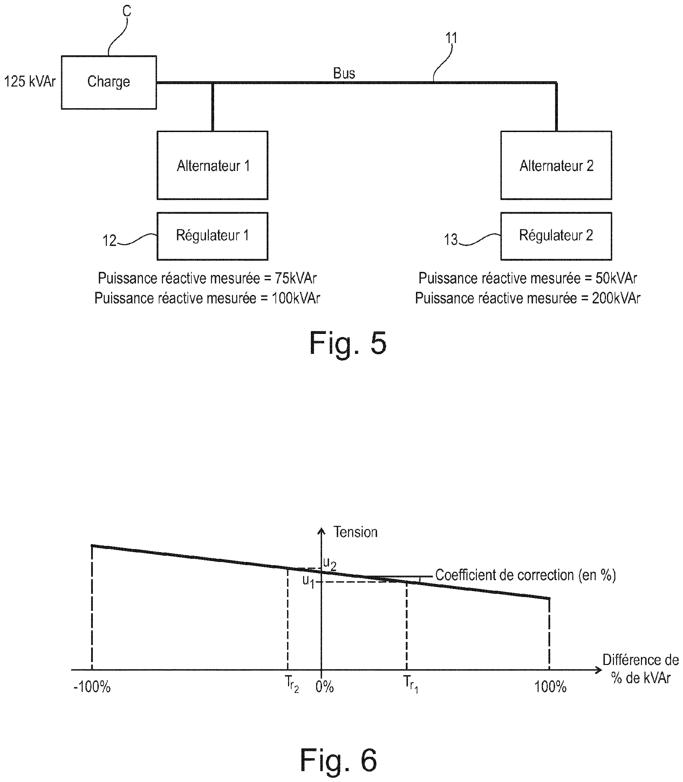

La figure 5 illustre un exemple de répartition de charge réactive selon l'invention.

Deux alternateurs 1 et 2 de puissances réactives nominales différentes, égales respectivement à 100 kVAr et 200 kVAr, débitent sur une charge réactive C de 125 kVAr via un bus 11. Les puissances réactives mesurées sur les deux alternateurs à l'instant t sont de respectivement 75% et 25% de leurs puissances nominales. La valeur moyenne du taux de puissance réactive à cet instant est de 50%. Le taux de puissance réactive prédéfini Tᵣₚ est, dans cet exemple, de 41,6%, correspondant à un point d'équilibre calculé en divisant la valeur de la charge C par la somme des puissance réactives nominales des deux alternateurs 1 et 2 : Tᵣₚ = 125/(100 + 200) x 100 = 41,6%.

La loi de régulation du régulateur 1 va faire diminuer la puissance réactive de l'alternateur 1 et la loi de régulation du régulateur 2 va faire augmenter la puissance réactive de l'alternateur 2, de telle sorte que les deux alternateurs convergent vers 41,6% de leur puissance réactive nominale.

La figure 6 représente un exemple de loi de régulation en tension selon l'invention. L'axe des abscisses correspond à l'écart entre le taux de puissance réactive de l'alternateur concerné et le taux pondéré des puissances réactives de tous les alternateurs en parallèle.

Comme expliqué précédemment, la loi de régulation calcule avantageusement à chaque instant la différence entre le taux de puissance réactive actuel d'un alternateur, notamment exprimé en pourcentage de sa puissance réactive nominale, et le taux pondéré des puissances réactives de tous les alternateurs en parallèle. Suivant cette différence, la consigne de tension de l'alternateur concerné est de préférence modifiée selon une droite de coefficient directeur paramétrable, comme représenté à la figure 6, afin de rapprocher le taux de puissance réactive de l'alternateur du taux de puissance prédéfini.

A titre d'exemple, on a représenté à la figure 6 la régulation en tension des deux alternateurs de la figure 5. La différence de taux de puissance en abscisse, correspondant à la différence entre le taux de puissance réactive de chaque alternateur et le taux de puissance réactive prédéfini, comme décrit précédemment, est égale à Tᵣ₁ = 75 - 41,6 = 33,6 % pour le premier alternateur 1 et Tᵣ₂ = 25 - 41,6 = -16,6 % pour le deuxième alternateur 2. La projection en ordonnée selon la droite de consigne en tension donne les valeurs de tension respectives u₁ et u₂ avec lesquelles il faut modifier les tensions de consigne des deux alternateurs 1 et 2 en entrée des régulateurs 12 et 13 afin d'avoir un partage de charge équilibré selon l'invention.

L'invention n'est pas limitée à l'exemple qui vient d'être décrit. Par exemple, d'autres mesures de régulation peuvent se combiner à l'invention.

Les alternateurs du parc d'alternateurs selon l'invention peuvent être identiques, ou varier en taille, puissance nominale et/ou modèle. L'invention concerne notamment tous les régulateurs d'alternateurs comprenant un ou plusieurs microcontrôleurs.

## Revendications

1. Procédé de régulation d'un parc d'alternateurs comportant au moins deux alternateurs (1, 2) débitant en parallèle sur une charge (C), équipés chacun d'un régulateur (12, 13) configuré pour délivrer un signal de sortie représentatif du taux de puissance réactive de l'alternateur correspondant rapporté à sa puissance réactive nominale, et d'une loi de régulation permettant de modifier le taux de puissance réactive de l'alternateur en fonction d'un signal d'entrée,
une étape dans laquelle
on génère à partir des signaux de sortie représentatifs du taux de puissance réactive de chacun des alternateurs, délivrés par les régulateurs correspondants, un signal pondéré envoyé comme signal d'entrée de ces régulateurs, de façon à faire converger chacun des alternateurs vers un taux de puissance réactive prédéfini (Tᵣₚ).

2. Procédé selon la revendication précédente, le signal pondéré étant la moyenne arithmétique des signaux de sortie représentatifs du taux de puissance réactive de chacun des alternateurs (1, 2).

3. Procédé selon l'une des deux revendications précédentes, une nouvelle consigne de tension (u₁, u₂) étant calculée par chaque régulateur (12, 13) en fonction d'un écart entre le taux de puissance réactive actuel et le taux correspondant au signal d'entrée, cette nouvelle consigne de tension permettant de déplacer le taux de puissance réactive de l'alternateur pour le rapprocher du taux de puissance prédéfini (Tᵣₚ).

4. Procédé selon l'une quelconque des revendications précédentes, la pondération des signaux de sortie étant réalisée de manière analogique.

5. Procédé selon l'une des revendications 1 à 3, la pondération des signaux de sortie étant réalisée de manière numérique.

6. Parc d'alternateurs comportant au moins deux alternateurs (1, 2) débitant en parallèle sur une charge (C), équipés chacun d'un régulateur (12, 13) configuré pour délivrer un signal de sortie représentatif du taux de puissance réactive de l'alternateur correspondant rapporté à sa puissance réactive nominale, et d'une loi de régulation permettant de modifier le taux de puissance réactive de l'alternateur en fonction d'un signal d'entrée,
les régulateurs recevant en entrée un signal pondéré généré à partir des signaux de sortie représentatifs du taux de puissance réactive de chacun des alternateurs de façon à faire converger chacun des alternateurs vers un taux de puissance réactive prédéfini (Tᵣₚ).

7. Parc selon la revendication précédente, chaque alternateur (1, 2) délivrant son taux de puissance réactive par une sortie analogique configurée en tension.

8. Parc selon la revendication 7, l'entrée de chaque régulateur (12, 13) étant configurée en tension.

9. Parc selon l'une des revendications 7 et 8, la pondération des signaux de sortie étant réalisée par un circuit de centralisation analogique.

10. Parc selon la revendication précédente, le circuit de centralisation raccordant en un point commun relié aux entrées analogiques les différentes sorties analogiques provenant des régulateurs à l'aide de résistances (R), notamment de valeurs identiques.

11. Parc selon la revendication 6, la pondération des signaux de sortie étant réalisée par un circuit de centralisation numérique.

12. Parc selon la revendication précédente, le circuit de centralisation étant un système externe de type automate programmable.

13. Parc selon la revendication 11 ou 12, chaque régulateur délivrant le taux de puissance réactive de son alternateur sur un bus numérique de communication.

14. Parc selon la revendication 13, le circuit de centralisation lisant le taux de puissance réactive de chaque régulateur, déterminant un signal pondéré et l'envoyant à chaque régulateur via ledit bus numérique de communication.

## Patentansprüche

1. Verfahren zur Regelung eines Wechselstromgeneratorparks mit wenigstens zwei Wechselstromgeneratoren (1, 2), die parallel eine Last (C) beliefern, die jeweils mit einem Regler (12, 13), der dazu ausgebildet ist, ein Ausgangssignal zu liefern, das für den Blindleistungsanteil des entsprechenden Generators bezogen auf dessen Nennblindleistung repräsentativ ist, und mit einem Regelgesetz, das es ermöglicht, den Blindleistungsanteil des Wechselstromgenerators in Abhängigkeit von einem Eingangssignal zu ändern, ausgestattet sind,
einem Schritt, bei dem
anhand der Ausgangssignale, die für den Blindleistungsanteil jedes der Wechselstromgeneratoren repräsentativ sind, die von den entsprechenden Reglern geliefert werden, ein gewichtetes Signal erzeugt wird, das als Eingangssignal dieser Regler gesendet wird, so dass jeder der Wechselstromgeneratoren zu einem vorgegebenen Blindleistungsanteil (Tᵣₚ) konvergiert.

2. Verfahren nach dem vorhergehenden Anspruch, wobei das gewichtete Signal das arithmetische Mittel der Ausgangssignale ist, die für den Blindleistungsanteil jedes der Wechselstromgeneratoren (1, 2) repräsentativ sind.

3. Verfahren nach einem der zwei vorhergehenden Ansprüche, wobei ein neuer Spannungsvorgabewert (u₁, u₂) von jedem Regler (12, 13) in Abhängigkeit von einer Abweichung zwischen dem aktuellen Blindleistungsanteil und dem Anteil, der dem Eingangssignal entspricht, berechnet wird, wobei es dieser neue Spannungsvorgabewert ermöglicht, den Blindleistungsanteil des Wechselstromgenerators zu verschieben, um ihn dem vorgegeben Leistungsanteil (Tᵣₚ) anzunähern.

4. Verfahren nach einem der vorhergehenden Ansprüche, wobei die Gewichtung der Ausgangssignale analog vorgenommen wird.

5. Verfahren nach einem der Ansprüche 1 bis 3, wobei die Gewichtung der Ausgangssignale digital vorgenommen wird.

6. Wechselstromgeneratorpark mit wenigstens zwei Wechselstromgeneratoren (1, 2), die parallel eine Last (C) beliefern, die jeweils mit einem Regler (12, 13), der dazu ausgebildet ist, ein Ausgangssignal zu liefern, das für den Blindleistungsanteil des entsprechenden Generators bezogen auf dessen Nennblindleistung repräsentativ ist, und mit einem Regelgesetz, das es ermöglicht, den Blindleistungsanteil des Wechselstromgenerators in Abhängigkeit von einem Eingangssignal zu ändern, ausgestattet sind,
wobei die Regler am Eingang ein gewichtetes Signal empfangen, das anhand der Ausgangssignale erzeugt wird, die für den Blindleistungsanteil jedes der Wechselstromgeneratoren repräsentativ sind, so dass jeder der Wechselstromgeneratoren zu einem vorgegebenen Blindleistungsanteil (Tᵣₚ) konvergiert.

7. Park nach dem vorhergehenden Anspruch, wobei jeder Wechselstromgenerator (1, 2) seinen Blindleistungsanteil über einen spannungskonfigurierten Analogausgang liefert.

8. Park nach Anspruch 7, wobei der Eingang jedes Reglers (12, 13) spannungskonfiguriert ist.

9. Park nach einem der Ansprüche 7 und 8, wobei die Gewichtung der Ausgangssignale von einem analogen Zentralisierungsschaltkreis vorgenommen wird.

10. Park nach dem vorhergehenden Anspruch, wobei der Zentralisierungsschaltkreis die verschiedenen Analogausgänge, die von den Reglern kommen, mithilfe von Widerständen (R), insbesondere mit gleichen Werten, an einem gemeinsamen Punkt verbindet, der mit den Analogausgängen verbunden ist.

11. Park nach Anspruch 6, wobei die Gewichtung der Ausgangssignale von einem digitalen Zentralisierungsschaltkreis vorgenommen wird.

12. Park nach dem vorhergehenden Anspruch, wobei der Zentralisierungsschaltkreis ein externes System vom Typ speicherprogrammierbare Steuerung ist.

13. Park nach Anspruch 11 oder 12, wobei jeder Regler den Blindleistungsanteil seines Wechselstromgenerators über einen digitalen Kommunikationsbus liefert.

14. Park nach Anspruch 13, wobei der Zentralisierungsschaltkreis den Blindleistungsanteil jedes Reglers liest, wobei er ein gewichtetes Signal bestimmt und es über den digitalen Kommunikationsbus an jeden Regler sendet.

## Claims

1. Method for regulating a bank of alternators comprising at least two alternators (1, 2) that deliver their output in parallel to a load (C), said alternators each being provided with a regulator (12, 13) that is configured to deliver an output signal representative of the reactive power level of the corresponding alternator divided by its nominal reactive power, and a control law allowing the reactive power level of the alternator to be modified depending on an input signal,
a step wherein
a weighted signal sent as the input signal of these regulators is generated from the output signals representative of the reactive power level of each of the alternators, i.e. the signals delivered by the corresponding regulators, so as to make each of the alternators converge to a predefined reactive power level (Tᵣₚ) .

2. Method according to the preceding claim, the weighted signal being the arithmetic mean of the output signals representative of the reactive power level of each of the alternators (1, 2).

3. Method according to either of the two preceding claims, a new voltage setpoint (u₁, u₂) being calculated by each regulator (12, 13) depending on a discrepancy between the current reactive power level and the level corresponding to the input signal, this new voltage setpoint allowing the reactive power level of the alternator to be shifted in order to bring it closer to the predefined power level (Tᵣₚ).

4. Method according to any one of the preceding claims, the output signals being weighted in an analogue manner.

5. Method according to any of Claims 1 to 3, the output signals being weighted in a digital manner.

6. Bank of alternators comprising at least two alternators (1, 2) that deliver their output in parallel to a load (C), said alternators each being provided with a regulator (12, 13) that is configured to deliver an output signal representative of the reactive power level of the corresponding alternator divided by its nominal reactive power, and a control law allowing the reactive power level of the alternator to be modified depending on an input signal,
the regulators receiving as input a weighted signal generated from output signals representative of the reactive power level of each of the alternators so as to make each of the alternators converge to a predefined reactive power level (Tᵣₚ).

7. Bank according to the preceding claim, each alternator (1, 2) delivering its reactive power level via an analogue output configured to deliver a voltage.

8. Bank according to Claim 7, the input of each regulator (12, 13) being configured to receive a voltage.

9. Bank according to either of Claims 7 and 8, the output signals being weighted by an analogue centralization circuit.

10. Bank according to the preceding claim, the centralization circuit joining at a common point connected to the analogue inputs the various analogue outputs coming from the regulators using resistors (R), in particular of identical resistances.

11. Bank according to Claim 6, the output signals being weighted by a digital centralization circuit.

12. Bank according to the preceding claim, the centralization circuit being an external system of programmable-logic-controller type.

13. Bank according to Claim 11 or 12, each regulator delivering the reactive power level of its alternator over a digital communication bus.

14. Bank according to Claim 13, the centralization circuit reading the reactive power level of each regulator, determining a weighted signal and sending it to each regulator via said digital communication bus.
